# EUROPÄISCHE PATENTANMELDUNG

(11) **EP 1 455 051 A1**
(43) Veröffentlichungstag der Anmeldung: **08.09.2004**
(21) Anmeldenummer: 04004335.8
(22) Anmeldetag: 26.02.2004
(51) Int. Cl.: E21B 10/40

(54) **Verfahren zum Einbringen eines Bohrloches**

(30) Priorität: 05.03.2003 DE 10309786; 18.03.2003 DE 10312035
(71) Anmelder: ILLINOIS TOOL WORKS INC., Glenview, Illinois 60025-5811 (US)
(72) Erfinder: Schubert, Frank, Dr., 49716 Meppen (DE); Kersten, Heinrich, 27283 Verden (DE)
(74) Vertreter: Gesthuysen, von Rohr & Eggert

(57) **Zusammenfassung**

Gegenstand der Erfindung ist ein Verfahren zum Einbringen eines Bohrloches (1) in ein Bauteil aus einem mineralischen Grundwerkstoff (2), der mit einem spezifisch anders gearteten Einlagerungswerkstoff (3) durchsetzt ist, mit den Verfahrenschritten
a) Einbringen des Bohrloches (1) in den mineralischen Grundwerkstoff (2) mit einem auf den Grundwerkstoff (2) abgestellten ersten Bohrwerkzeug (4) an einer Bohrmaschine bis zum Auftreffen des ersten Bohrwerkzeugs (4) auf den Einlagerungswerkstoff (3),
b) Auswechseln des ersten Bohrwerkzeugs (4) gegen ein zweites, auf den Einlagerungswerkstoff (3) abgestimmtes zweites Bohrwerkzeug (5) und Durchtrennen des Einlagerungswerkstoffs (3) und Fortsetzen des Bohrens mittels des zweiten Bohrwerkzeugs (5),
c) nach dem Durchtrennen des Einlagerungswerkstoffs (3) ggf. Auswechseln des zweiten Bohrwerkzeugs (5) gegen das erste Bohrwerkzeug (4) oder ein gleichartiges Bohrwerkzeug und Fortsetzen des Bohrens im mineralischen Grundwerkstoff (2).

## Beschreibung

Die Erfindung betrifft ein Verfahren zum Einbringen eines Bohrloches in ein Bauteil aus einem mineralischen Grundwerkstoff, der mit einem spezifisch anders gearteten Einlagerungswerkstoff durchsetzt ist, insbesondere zum Einbringen eines Bohrloches in Beton mit eingelagertem Bewehrungsstahl.

Betonteile sind normalerweise mit Bewehrungsstahl bewehrt. Der meist mit Durchmessern bis maximal 12 mm stabartig ausgeführte Bewehrungsstahl hat meist auf der Außenseite umlaufende Ausformungen, die einen Formschluß mit dem umgebenden Betonmaterial sicherstellen. Trifft man beim Bohren beispielsweise in derartigem Stahlbeton auf einen Bewehrungsstahl, so stellt man dies durch reduzierten Bohrvorschub, eine Veränderung des Bohrgeräusches und/oder eine Veränderung des Schwingungsverhaltens der Bohrmaschine fest. Normalerweise wird dann das Bohrwerkzeug wieder aus dem bereits hergestellten Bohrloch herausgezogen und an benachbarter Stelle ein erneutes Bohrloch in den Stahlbeton eingebracht. Schon das ist unschön, verbleibt doch ein ggf. wieder zu verfüllendes oder anderweit zu kaschierendes Bohrloch. Darüber hinaus gibt es mittlerweile viele Fälle, in denen man an einer exakt vorgegebenen Stelle ein Bohrloch in den Stahlbeton einbringen muß. Dann kann man so überhaupt nicht arbeiten.

Im Regelfall werden Bohrungen in Stahlbeton mittels hartmetallbestückter Bohrwerkzeuge vorzugsweise hammerbohrend eingebracht. Beim Hammerbohren treffen pro Umdrehung des Bohrwerkzeugs mehrere axiale Schläge mit hoher Einzelschlagstärke auf das Bohrwerkzeug. Das Bohrwerkzeug ist in seiner Gestaltung entweder auf eine wirksame Zerspanung des mineralischen Grundwerkstoffs, insbesondere also des Betons ausgelegt, oder es ist auf eine wirksame Zerspanung von Stahl, also auch des Bewehrungsstahls ausgelegt, kann dann aber den mineralischen Grundwerkstoff, insbesondere den Beton, nicht effektiv zerspanen. Im Regelfall wird man also mit einem Bohrwerkzeug arbeiten, das auf den Grundwerkstoff abgestimmt ist. Dieses trifft nun in Abhängigkeit von den geometrischen Randbedingungen relativ lange Zeit mit den zuvor erläuterten Schlägen auf den Bewehrungsstahl. Der Bewehrungsstahl wird durch die Schläge über eine gewisse Länge im mineralischen Grundwerkstoff gelockert, der innige Verbund wird aufgelöst. Dadurch verliert das Stahlbetonteil einen Teil seiner Belastbarkeit. Es stimmt mit den Berechnungen des Statikers letztlich dann nicht mehr überein.

Das erfindungsgemäße Verfahren soll das zuvor erläuterte Problem lösen. Es zeichnet sich durch die Merkmale des Patentanspruchs 1 aus. Wesentlich ist, daß das erste Bohrwerkzeug, dessen Auslegung auf den Grundwerkstoff abgestimmt ist, nur bis zum Auftreffen auf den Einlagerungswerkstoff, insbesondere also den Bewehrungsstahl benutzt wird. Danach wird das erste Bohrwerkzeug gegen eine zweites Bohrwerkzeug ausgewechselt, das dem Durchtrennen des Einlagerungswerkstoffs, also insbesondere des Bewehrungsstahls dient. Nach dem somit mit einem optimal angepaßten zweiten Bohrwerkzeug erfolgenden Durchtrennen des Bewehrungsstahls kann dann wieder, wenn das Bohrloch noch weiter in die Tiefe eingebracht werden muß, wieder auf das erste Bohrwerkzeug, das speziell für den mineralischen Grundwerkstoff, insbesondere also den Beton geeignet ist, umgerüstet werden. Man kann auch ein anderes, drittes Bohrwerkzeug einsetzen, das besonders gut im mineralischen Grundwerkstoff bohrt. Dieses kann beispielsweise dann einen geringeren Durchmesser als das erste Bohrwerkzeug aufweisen, falls man eine abgestufte Bohrung haben möchte.

Besonders bevorzugte Ausgestaltungen und Weiterbildungen des erfindungsgemäßen Verfahrens sind Gegenstand der Unteransprüche.

Gegenstand der Erfindung ist auch ein Ringbohrer als besonders zweckmäßiges zweites Bohrwerkzeug zum Einsatz bei einem erfindungsgemäßen Verfahren.

Im folgenden wird die Erfindung anhand einer lediglich ein Ausfuhrungsbeispiel darstellenden Zeichnung näher erläutert. In der Zeichnung zeigt
- Fig. 1: schematisch und ausschnittweise ein Bauteil aus einem mineralischen Grundwerkstoff, insbesondere aus Beton, mit darin eingelagertem Einlagerungswerksstoff, insbesondere einem Bewehrungsstahl, angedeutet die Lage eines ersten Bohrwerkzeugs, insbesondere eines Hartmetall-Steinbohrers beim Auftreffen auf den Bewehrungsstahl,
- Fig. 2: die Lage des Bewehrungsstahls beim Ausführungsbeispiel aus Fig. 1,
- Fig. 3: ein auf das Durchtrennen von Bewehrungsstahl abgestimmtes zweites Bohrwerkzeug zum Einsatz in einem erfindungsgemäßen Verfahren,
- Fig. 4: das Bohrwerkzeug aus Fig. 3 während des Durchtrennens des Einlagerungswerkstoffs, insbesondere des Bewehrungsstahls, im Schnitt und
- Fig. 5: ein Bohrwerkzeug gemäß Fig. 4 mit einer Werkzeugverlängerung im Schnitt.

Gegenstand der Erfindung ist ein Verfahren zum Einbringen eines Bohrloches 1 in ein Bauteil aus einem mineralischen Grundwerkstoff 2, der mit einem spezifisch anders gearteten Einlagerungswerkstoff 3 durchsetzt ist, mit den Verfahrenschritten Einbringen des Bohrloches 1 in den mineralischen Grundwerkstoff 2 mit einem auf den Grundwerkstoff 2 abgestellten ersten Bohrwerkzeug 4 an einer Bohrmaschine bis zum Auftreffen des ersten Bohrwerkzeugs 4 auf den Einlagerungswerkstoff 3, Auswechseln des ersten Bohrwerkzeugs 4 gegen ein zweites, auf den Einlagerungswerkstoff 3 abgestimmtes zweites Bohrwerkzeug 5 und Durchtrennen des Einlagerungswerkstoffs 3 und Fortsetzen des Bohrens mittels des zweiten Bohrwerkzeugs 5, nach dem Durchtrennen des Einlagerungswerkstoffs 3 ggf. Auswechseln des zweiten Bohrwerkzeugs 5 gegen das erste Bohrwerkzeug 4 oder ein gleichartiges Bohrwerkzeug und Fortsetzen des Bohrens im mineralischen Grundwerkstoff 2.

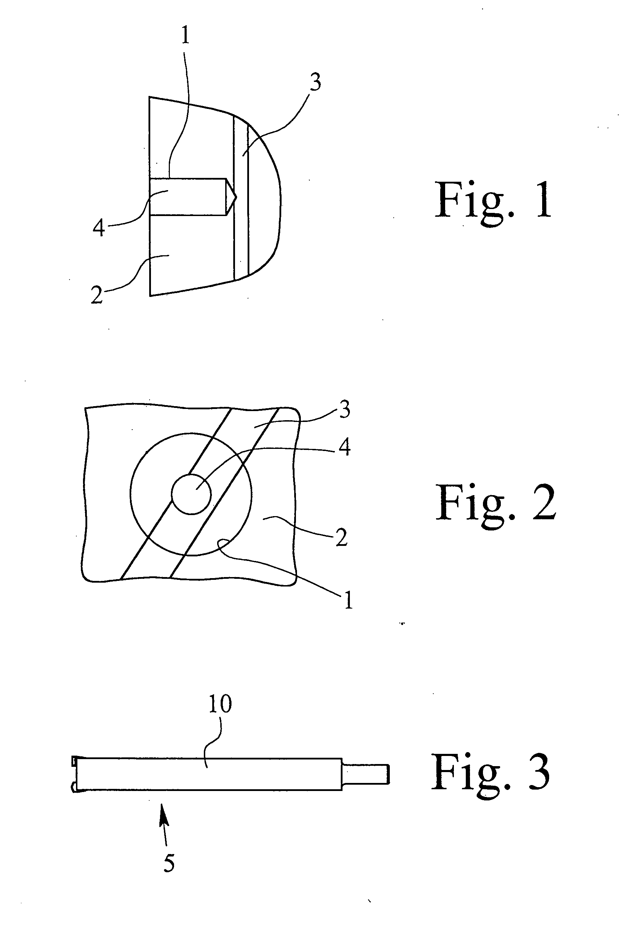

In Fig. 1 erkennt man das Bohrloch 1 im Bauteil 2, das hier ein Stahlbetonbauteil ist, grundsätzlich aber nur dadurch charakterisiert ist, daß es eben aus einem mineralischen Grundwerkstoff besteht. Dieses Bauteil 2 aus dem Grundwerkstoff ist mit dem Einlagerungswerkstoff durchsetzt, bei dem es sich hier um einen Bewehrungsstahl 3 handelt. Fig. 1 zeigt, daß das Einbringen des Bohrlochs 1 in das Bauteil 2 zunächst mit einem ersten Bohrwerkzeug 4, hier in Form eines Hartmetall-Steinbohrers, erfolgt ist bis zum Auftreffen des Bohrwerkzeugs 4 auf den Bewehrungsstahl 3. Fig. 2 zeigt in einem Schnitt senkrecht zur Zeichenebene in Fig. 1 die Lage der Spitze des Bohrwerkzeugs 4 auf den Bewehrungsstahl 3 und den Durchmesser des Bohrlochs 1, das vom ersten Bohrwerkzeug 4 hergestellt worden ist.

Nicht dargestellt ist eine Bohrmaschine, an der das erste Bohrwerkzeug 4 montiert wird mittels einer üblichen Aufnahme wie SDS-plus, SDS-max, 6-Kant etc.

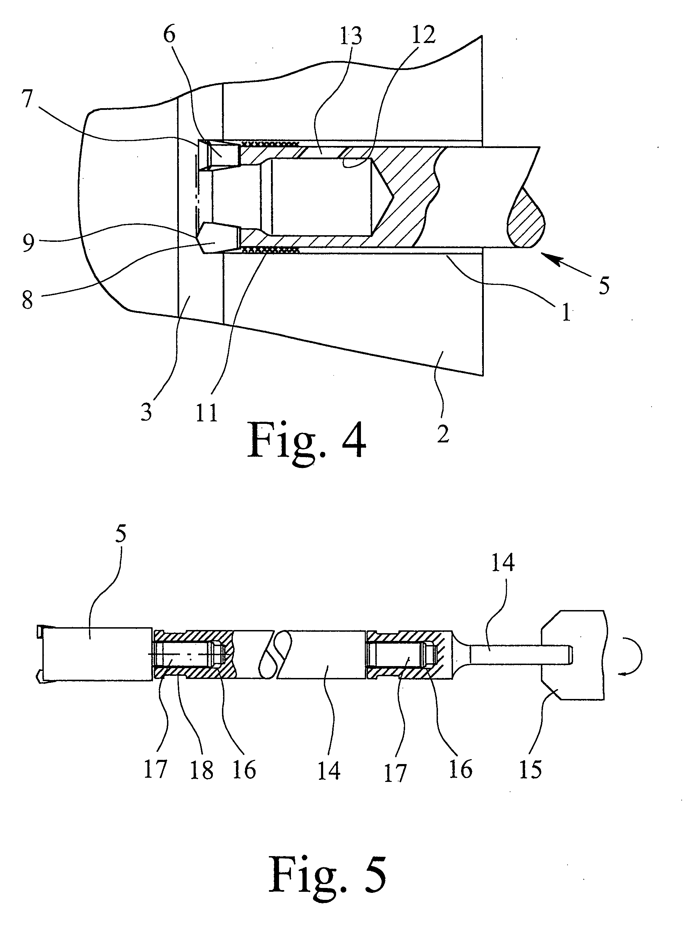

Wesentlich ist nun der Einsatz des zweiten Bohrwerkzeugs 5, das in Fig. 3 dargestellt ist. Dieses zweite Bohrwerkzeug 5 wird eingesetzt, wenn das erste Bohrwerkzeug 4 auf den Bewehrungsstahl 3 getroffen hat. Dieses zweite Bohrwerkzeug 5 ist in besonderer Weise auf den Einlagerungswerkstoff, hier also den Bewehrungsstahl 3 abgestimmt. Mit diesem zweiten Bohrwerkzeug 5 wird der Einlagerungswerkstoff unter Fortsetzung des Bohrloches 1 durchtrennt. Fig. 4 zeigt die Spitze des zweiten Bohrwerkzeugs 5 beim Durchtrennen des Bewehrungsstahls 3 im Bohrloch 1.

Nach dem Durchtrennen des Einlagerungswerkstoffs, insbesondere also des Bewehrungsstahls 3, kann man entweder wieder auf das erste Bohrwerkzeug 4 zurück umrüsten und die Bohrung im Beton-Bauteil 2 fortsetzen oder man kann ein gleichartiges, ebenfalls für den Grundwerkstoff geeignetes Bohrwerkzeug zur Fortsetzung des Bohrloches 1 einsetzen bis die gewünschte Tiefe des Bohrloches 1 erreicht ist.

Das erfindungsgemäße Verfahren findet ganz besonders zweckmäßig dann Anwendung, wenn das Bohren mit beiden Bohrwerkzeugen 4, 5 insbesondere als Hammerbohren, ggf. auch als Schlagbohren, erfolgt. Alternativ kann man auch vorsehen, daß das Bohren mit dem ersten Bohrwerkzeug 4 im ersten Verfahrensschritt oder das Bohren im dritten Verfahrensschritt als Schlagoder Hammerbohren erfolgt, während das Durchtrennen des Bewehrungsstahls 3 mit dem zweiten Bohrwerkzeug 5 im zweiten Verfahrensschritt als reines Drehbohren erfolgt.

Normale Hartmetall-Steinbohrer sind gelegentlich für das Hammerbohren nicht stabil genug. Es gibt dann entsprechende Bohrwerkzeuge 4, die für das Hammerbohren besonders geeignet sind.

Die Fig. 3 und 4 zeigen, daß als zweites Bohrwerkzeug 5 ein besonders, auf den Einlagerungswerkstoff abgestimmtes Bohrwerkzeug Verwendung findet. Genau gesagt handelt es sich dabei um einen Ringbohrer, der als zweites Bohrwerkzeug 5 verwendet wird. Aus dem Stand der Technik sind Ringbohrer dieser Art auch als Bohrkronen bekannt. Der dargestellte Ringbohrer, der als zweites Bohrwerkzeug 5 eingesetzt wird, ist in besonderer Weise ausgestaltet, um das Durchtrennen des Bewehrungsstahls 3 ggf. auch im Schlagbohrverfahren oder Hammerbohrverfahren zu erlauben.

Als Alternative zu Hartmetall kommt für die Schneidkörper auch ein Nichtmetall, insbesondere eine entsprechende Keramik, beispielsweise ein Aluminiumoxid in Frage. Außerdem sind im Stand der Technik natürlich entsprechende Ausrüstungen von Metallen, Hartmetallen und Nichtmetallen zur Erhöhung der Hammerbohrfähigkeit bekannt, die angewendet werden können.

Dargestellt ist, daß als Ringbohrer eine hohlzylindrische Bohrkrone mit mindestens zwei Hartmetall-Schneidkörpern 6, 8 an dem in Bohrrichtung zeigenden Endbereich verwendet wird. Das dargestellte Ausführungsbeispiel zeigt in bevorzugter Ausführungsform, daß ein Ringbohrer 5 mit an dem in Bohrrichtung zeigenden Endbereich angeordneten Schneidkörpern 6, 8 unterschiedlicher, insbesondere abwechselnd unterschiedlicher Geometrie der Schneiden eingesetzt wird.

Eine nicht dargestellte Alternative besteht darin, daß ein Ringbohrer mit an den in Bohrrichtung zeigenden Endbereich angeordneten Schneidkörpern gleicher Geometrie der Schneiden, insbesondere einer Dachkantengeometrie der Schneiden mit in Umfangsrichtung ausgerichteten Dachfirsten eingesetzt wird. Insbesondere im zuletzt genannten Fall ist es zweckmäßig, die Schneiden der Schneidkörper in einem Neigungswinkel, insbesondere einem Winkel von ca. 10° gegen die Drehrichtung des Ringbohrers anzuordnen, damit die Schneidwirkung im Bewehrungsstahl besonders hoch ist.

Aus dem Stand der Technik sind Ringbohrer für das Drehbohren bekannt, die eine der zuvor angesprochenen Geometrie ähnliche Geometrie haben. Diese sind aber nicht hammerbohrfähig. Demgegenüber ist im dargestellten Ausführungsbeispiel vorgesehen, daß ein Ringbohrer 5 eingesetzt wird, bei dem die Schneiden hammerbohrfähig in den in Bohrrichtung zeigenden Endbereich des Ringbohrers 5 eingebettet, insbesondere eingelötet oder eingeschweißt sind.

Es bleibt weiterer Optimierung im Detail vorbehalten herauszufinden, welches optimale Ausrüstungen des Ringbohrers 5, also des zweiten Bohrwerkzeuges 5, mit passenden und passend angeordneten Schneidkörpern 6, 8 sind. Beispielsweise kann man auch vorsehen, daß ein Ringbohrer 5 verwendet wird, bei dem die Schneidkörper 6, 8 aus unterschiedlichen Werkstoffen, insbesondere aus abwechselnd unterschiedlichen Werkstoffen bestehen und/oder daß als Ringbohrer 5 eine hohlzylindrische Bohrkrone, vorzugsweise ohne Zentrierbohrer, gemäß einem oder mehreren der Patentansprüche der DE 198 10 775 A1 verwendet wird.

Praxisversuche haben gezeigt, daß dann, wenn man das zweite Bohrwerkzeug 5 im vorliegenden Verfahren konsequent einsetzt, auch eine gleiche Geometrie der Schneiden mit Dachkantengeometrie besonders zweckmäßig ist, wenn man im Hammerbohrverfahren auch im zweiten Verfahrensschritt zum Armierungsschneiden arbeitet. Das gibt die Möglichkeit, durchgehend nur im Hammerbohrverfahren zu arbeiten, so daß man die Bohrmaschine nicht umschalten muß.

Ein für den vorliegenden Einsatzfall besonders geeigneter Ringbohrer, der als zweites Bohrwerkzeug 5 im erfindungsgemäßen Verfahren mit besonderem Vorteil eingesetzt werden kann, ist in der DE 198 10 775 A1 der Anmelderin als "Bohrkrone" beschrieben. Diese Bohrkrone ist an sich nur für mineralische Grundwerkstoffe vorgesehen und gestaltet worden. Es hat sich nun gezeigt, daß diese Bohrkrone sich erstaunlicherweise für das Durchtrennen von Bewehrungsstahl in besonderem Maße eignet und im vorliegenden Verfahren besonders vorteilhaft Einsatz fmden kann. Man erkennt in Fig. 4 nun einen ersten Schneidkörper in Form eines Spatzahns 6 mit einer geradlinigen, sich in einer zur Längsachse des Ringbohrers 5 im wesentlichen senkrechten ersten Ebene erstreckenden Schneidkante 7 und gegenüber einen Schneidkörper in Form eines Meißelzahns 8 mit einer sich von einem in Bohrrichtung über die Schneidkante 7 des Spatzahns 6 vorragenden Punkt zu beiden Seiten im wesentlichen dachförmig und in einer zu der ersten Ebene senkrechten zweiten Ebene erstreckenden Schneidkante 9. Diese Gestaltung eignet sich in besonderer Weise auch zum Einsatz des zweiten Bohrwerkzeugs 5 im zweiten Verfahrensschritt beim Hammerbohren oder Schlagbohren.

Im einzelnen darf zur Ausgestaltung des Ringbohrers, also des zweiten Bohrwerkzeugs 5, in diesem Ausführungsbeispiel auf die DE 198 10 775 A1 verwiesen werden, deren gesamter Offenbarungsgehalt durch Bezugnahme in den Offenbarungsgehalt der vorliegenden Patentanmeldung aufgenommen wird.

Fig. 4 zeigt nun noch eine weitere Besonderheit des hier dargestellten bevorzugten Ausführungsbeispiels. Hier ist nämlich vorgesehen, daß im erfindungsgemäßen Verfahren ein Ringbohrer verwendet wird, bei dem in Längsrichtung hinter dem mit den Schneidkörpern 6, 8 bestückten Ring am Schaft 10 ein Zentrierring 11 bzw. eine Führungsbuchse mit einem dem wirksamen Außendurchmesser der Arbeitsbahn der Schneidkörper 6, 8 entsprechenden Außendurchmesser vorgesehen ist. Der Zentrierring 11 kann beispielsweise ein aufgeschrumpfter Gleitring sein. Der Zentrierring 11 bzw. eine entsprechende Führungsbuchse stellt eine sichere Führung des Gesamtsystems im zweiten Verfahrensschritt im Bohrloch 1 sicher, was insbesondere dann von Vorteil ist, wenn der Bewehrungsstahl 3 nicht genau mittig getroffen wird und dadurch Querkräfte auftreten. Diese werden nun über den Zentrierring 11 aufgenommen und nicht über die Schneidkörper 6; 8 seitlich in den Werkstoff abgeleitet. Letzteres würde ein vergrößertes Bohrloch 1 ergeben, das für die sichere Lastaufnahme höher belasteter Dübelverbindungen nicht mehr optimal geeignet wäre.

Besonders bevorzugt ist eine Ausführung, die dadurch gekennzeichnet ist, daß der Schaft 10 des Ringbohrers 5 bzw. der Zentrierring 11 bzw. eine entsprechende Führungsbuchse mit gegen abrasive Stoffe widerstandsfähigem Material versehen, insbesondere beschichtet ist. Ein Zentrierring oder eine Führungsbuchsbuchse, die separat aufgebracht ist, kann auch aus solchem Material bestehen. Dabei kommen insbesondere beispielsweise kohleverstärkte, faserverstärkte, PTFE-verstärkte Materialien in Frage. Wesentlich ist, daß sich kein "Festbacken" des Bohrwerkzeugs 5 im Bohrloch 1 ergibt, obwohl dieses mit enger Toleranz im Bohrloch 1 geführt ist.

Eine Beschichtung mit gegen abrasive Stoffe widerstandsfähigem Material ist auch dann zweckmäßig, wenn sie sich nur über eine relativ kurze Strecke im in Längsrichtung hinter dem mit den Schneidkörpern 6, 8 bestückten Ring befindet.

Das in Fig. 4 dargestellte Ausführungsbeispiel zeigt eine weiter bevorzugte Ausführungsform, die dadurch gekennzeichnet ist, daß ein Ringbohrer 5 verwendet wird, bei dem im Inneren von den Schneidkörpern 6, 8 ausgehend eine zylindrische, sich von der Stirnseite weg erweiternde Ausnehmung 12 vorgesehen ist, in der ein herausgeschnittener Bohrkern Platz findet. Das dargestellte Ausführungsbeispiel zeigt die Ausnehmung 12 hinterschnitten, so daß ein herausgeschnittener Bohrkern insbesondere von Bewehrungsstahl 3 darin sicher aufgehoben ist, auch wenn das Werkzeug insgesamt aus dem Bohrloch 1 in Fig. 4 nach rechts zurückgezogen wird.

Sollte sich der Bohrkern in der Ausnehmung 12 verklemmen, so kann man ihn durch einen seitlich schräg zum Mantel verlaufenden Ausstoßkanal 13 herausstoßen. Dieser Ausstoßkanal 13 dient gleichzeitig beim normalen Bohren auch bereits zur Abfuhr von Bohrmehl nach hinten axial hinter den Zentrierring 11.

Bereits oben ist im einzelnen darauf hingewiesen worden, daß für den Einsatz der im erfindungsgemäßen Verfahren verwendeten Bohrwerkzeuge 4, 5 eine übliche Bohrmaschine mit einem üblichen Bohrfutter, beispielsweise einem Klauenfutter, einem 6-Kantfutter etc. eingesetzt wird. Wesentlich ist, daß das Bohrwerkzeug 4; 5 stets wieder aus dem Bohrloch 1 rückwärts herausgezogen werden kann, also eine Kraftübertragung in axialer Richtung von der Bohrmaschine auf das Bohrwerkzeug 4; 5 erfolgen kann.

Hat man größere Bohrtiefen zu realisieren, so kann man vorsehen, daß in größeren Bohrtiefen mit einer Verlängerung 14 zwischen Bohrmaschine 15 und Bohrwerkzeug 5 gearbeitet wird, die nicht nur mit der Bohrmaschine 15, sondem auch mit dem Bohrwerkzeug 5 auf Zug in axialer Richtung beanspruchbar verbunden wird. Im dargestellten Ausführungsbeispiel sind die in axialer Richtung beanspruchbaren Verbindungen entsprechende Gewindefassungen 16, in die ein entsprechender Gewindestutzen 17 am Gegenstück eingeschraubt wird. Dementsprechend sind auch Werkzeugangriffsflächen 18 vorgesehen, so daß auch eine fest angezogene Gewindeverbindung 16/17 ohne weiteres wieder gelöst werden kann.

Es versteht sich von selbst, daß die Gewindesteigung so gerichtet ist, daß sich die Gewindeverbindung 16/17 nicht von selbst löst.

Gegenstand der Erfindung ist nicht nur ein Verfahren, das in der zuvor erläuterten Weise abläuft, sondern auch gegenständlich ein Ringbohrer wie er insbesondere in den Fig. 3, 4 und 5 dargestellt ist, der sich eben in besonderer Weise zur Verwendung bei einem erfindungsgemäßen Verfahren eignet. Gegenstand der Erfindung ist also auch ein Ringbohrer mit allen vorrichtungstechnischen Merkmalen der anliegenden Patentansprüche.

Insgesamt ist es im übrigen so, daß vorzugsweise das im zweiten Verfahrensschritt verwendete zweite Bohrwerkzeug 5 einen etwa gleichen, vorzugsweise einen größeren Durchmesser als das im ersten und ggf. auch das im dritten Verfahrensschritt verwendete Bohrwerkzeug 5 aufweist.

## Patentansprüche

1. Verfahren zum Einbringen eines Bohrloches in ein Bauteil aus einem mineralischen Grundwerkstoff, der mit einem spezifisch anders gearteten Einlagerungswerkstoff durchsetzt ist, mit den Verfahrenschritten
a) Einbringen des Bohrloches in den mineralischen Grundwerkstoff mit einem auf den Grundwerkstoff abgestellten ersten Bohrwerkzeug an einer Bohrmaschine bis zum Auftreffen des ersten Bohrwerkzeugs auf den Einlagerungswerkstoff,
b) Auswechseln des ersten Bohrwerkzeugs gegen ein auf den Einlagerungswerkstoff abgestimmtes zweites Bohrwerkzeug und Durchtrennen des Einlagerungswerkstoffs und Fortsetzen des Bohrens mittels des zweiten Bohrwerkzeugs,
c) nach dem Durchtrennen des Einlagerungswerkstoffs ggf. Auswechseln des zweiten Bohrwerkzeugs gegen das erste Bohrwerkzeug oder ein gleichartiges Bohrwerkzeug und Fortsetzen des Bohrens im mineralischen Grundwerkstoff.

2. Verfahren nach Anspruch 1, **dadurch gekennzeichnet, daß** das Verfahren für den mineralischen Grundwerkstoff Beton und den Einlagerungswerkstoff Bewehrungsstahl eingesetzt wird.

3. Verfahren nach Anspruch 1 oder 2, **dadurch gekennzeichnet, daß** das Bohren mit beiden Bohrwerkzeugen als Schlagbohren erfolgt und/oder daß als erstes Bohrwerkzeug ein Hartmetall-Steinbohrer verwendet wird.

4. Verfahren nach Anspruch 1 oder 2, **dadurch gekennzeichnet, daß** das Bohren mit beiden Bohrwerkzeugen als Hammerbohren erfolgt, wobei, vorzugsweise, als erstes Bohrwerkzeug ein Hammerbohrer verwendet wird.

5. Verfahren nach einem der Ansprüche 1 bis 4, **dadurch gekennzeichnet, daß** als zweites Bohrwerkzeug ein für Bewehrungsstahl geeigneter Ringbohrer verwendet wird.

6. Verfahren nach Anspruch 5, **dadurch gekennzeichnet, daß** als Ringbohrer eine hohlzylindrische Bohrkrone mit mindestens zwei Hartmetall-Schneidkörpern an dem in Bohrrichtung zeigenden Endbereich verwendet wird und/oder daß als Ringbohrer eine hohlzylindrische Bohrkrone mit Schneidkörpern aus einem Nichtmetall, insbesondere aus Keramik, an dem in Bohrrichtung zeigenden Endbereich verwendet wird.

7. Verfahren nach Anspruch 5 oder 6, **dadurch gekennzeichnet, daß** ein Ringbohrer mit an dem in Bohrrichtung zeigenden Endbereich angeordneten Schneidkörpern unterschiedlicher, insbesondere abwechselnd unterschiedlicher Geometrie der Schneiden eingesetzt wird oder daß ein Ringbohrer mit an dem in Bohrrichtung zeigenden Endbereich angeordneten Schneidkörpern gleicher Geometrie der Schneiden, insbesondere einer Dachkantengeometrie der Schneiden mit in Umfangsrichtung ausgerichteten Dachfirsten eingesetzt wird.

8. Verfahren nach einem der Ansprüche 5 bis 7, **dadurch gekennzeichnet, daß** ein Ringbohrer eingesetzt wird, bei dem die Schneidkörper hammerbohrfähig in den in Bohrrichtung zeigenden Endbereich des Ringbohrers eingebettet, insbesondere eingelötet oder eingeschweißt sind.

9. Verfahren nach einem der Ansprüche 5 bis 8, **dadurch gekennzeichnet, daß** ein Ringbohrer verwendet wird, bei dem die Schneidkörper aus unterschiedlichen Werkstoffen, insbesondere aus abwechselnd unterschiedlichen Werkstoffen bestehen.

10. Verfahren nach einem der Ansprüche 5 bis 9, **dadurch gekennzeichnet, daß** ein Ringbohrer verwendet wird, bei dem die Schneidkörper in unterschiedlichen Positionen, insbesondere in abwechselnd unterschiedlichen Positionen am in Bohrrichtung zeigenden Endbereich des Ringbohrers angeordnet sind.

11. Verfahren nach einem der Ansprüche 5 bis 10, **dadurch gekennzeichnet, daß** ein Ringbohrer verwendet wird, bei dem in Längsrichtung hinter dem mit den Schneidkörpern bestückten Ring am Schaft ein Zentrierring bzw. eine Führungsbuchse mit einem dem wirksamen Außendurchmesser der Arbeitsbahn der Schneidkörper i. w. entsprechenden Außendurchmesser vorgesehen ist und/oder daß ein Ringbohrer verwendet wird, bei dem der Schaft des Ringbohrers in Längsrichtung hinter dem mit den Schneidkörpern bestückten Ring bzw. der Zentrierring bzw. die Führungsbuchse mit gegen abrasive Stoffen widerstandsfähigem Material versehen, insbesondere beschichtet, oder aus solchem Material ausgeführt ist.

12. Verfahren nach einem der Ansprüche 5 bis 12, **dadurch gekennzeichnet, daß** ein Ringbohrer verwendet wird, bei dem im Inneren von den Schneidkörpern ausgehend eine zylindrische, sich von der Stirnseite weg erweiternde Ausnehmung vorgesehen ist, in der ein herausgeschnittener Bohrkern Platz findet wobei, vorzugsweise, die Ausnehmung über einen schräg nach außen zum Mantel verlaufenden Ausstoßkanal zugänglich ist.

13. Verfahren nach einem der Ansprüche 1 bis 12, **dadurch gekennzeichnet, daß** das Auswechseln des zweiten Bohrwerkzeugs gegen das erste Bohrwerkzeug dadurch erfolgt, daß das eine Bohrwerkzeug aus einer Gewindefassung herausgeschraubt und das andere Bohrwerkzeug in die Gewindefassung eingeschraubt wird und/oder daß in größeren Bohrtiefen mit einer Verlängerung zwischen Bohrmaschine und Bohrwerkzeug gearbeitet wird, die nicht nur mit der Bohrmaschine, sondern auch mit dem Bohrwerkzeug auf Zug in axialer Richtung beanspruchbar verbunden wird.

14. Verfahren nach einem der Ansprüche 1 bis 13, **dadurch gekennzeichnet, daß** das im zweiten Verfahrensschritt verwendete zweite Bohrwerkzeug einen etwa gleichen, vorzugsweise einen größeren Durchmesser als das im ersten und ggf. auch das im dritten Verfahrensschritt verwendete Bohrwerkzeug aufweist.

15. Ringbohrer zur Verwendung bei einem Verfahren nach einem der Ansprüche 1 bis 14, **gekennzeichnet durch** die vorrichtungsmäßigen Merkmale des kennzeichnenden Teils eines oder mehrerer der Ansprüche 5 bis 12.
